(19) **Europäisches Patentamt**
**European Patent Office**
**Office européen des brevets**

(11) **EP 4 737 416 A1**

(12) # EUROPEAN PATENT APPLICATION

(43) Date of publication:
**06.05.2026 Bulletin 2026/19**

(21) Application number: **25209825.6**

(22) Date of filing: **20.10.2025**

(51) International Patent Classification (IPC):
**C03C 15/02** (2006.01)    **B24B 1/00** (2006.01)
**B24B 7/00** (2006.01)

(52) Cooperative Patent Classification (CPC):
**C03C 15/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.11.2024 JP 2024193693**

(71) Applicant: **SHIN-ETSU CHEMICAL CO., LTD.,**
**Chiyoda-ku,**
**Tokyo 1000005 (JP)**

(72) Inventor: **ANDO, Masao**
**Niigata, 9428601 (JP)**

(74) Representative: **Mewburn Ellis LLP**
**Aurora Building**
**Counterslip**
**Bristol BS1 6BX (GB)**

(54) **METHOD FOR PRODUCING SYNTHETIC QUARTZ GLASS SUBSTRATE**

(57)    Provided is a method for producing a synthetic quartz glass substrate, including an evaluation step of evaluating a depth of a machining damaged layer at a machined surface of a synthetic quartz glass substrate, and a removal step of removing the machining damaged layer on the basis of a result of evaluation of the depth of the machining damaged layer.

A machining damaged layer is removed on the basis of evaluation of the depth of the machining damaged layer at a machined surface. The machining damaged layer can be reliably and efficiently removed, and the productivity of a synthetic quartz glass substrate can be improved.

EP 4 737 416 A1

**Description**

TECHNICAL FIELD

The present invention relates to a method for producing a synthetic quartz glass substrate.

BACKGROUND

Synthetic quartz glass substrates to be used for semiconductor substrates, optical members, microfluidics, microlens arrays, and the like undergo cutting machining for forming through holes or blind holes, grooves, level differences and the like, and are put to practical use. When such cutting machining is performed, a tool such as grinding stone or a drill is commonly used. Here, a machining damaged layer is generated at the machined surface. For removing the machining damaged layer, it is required that the amount of grinding, the amount of polishing or the like be made large in a subsequent grinding step, polishing step or the like, which causes deterioration of productivity.

A fixed abrasive grain tool that is typically used for such cutting machining is dressed before the start of the cutting machining or during the machining for adjusting the amount of protrusion of abrasive grains or forming a cutting edge of abrasive grains. Since the state of the tool after the dressing is not always constant, a deep machining damaged layer may be exceptionally generated or there may be a large variation in the depth of the machining damaged layer depending on the life of the fixed abrasive grain tool.

To address such a problem, for example, JP-A 2012-035330 (Patent Document 1) discloses a method in which in production of a glass substrate for a magnetic recording medium, an abrasive grain size distribution width of abrasive grains contained in grinding stone is set equal to or less than a predetermined value to suppress generation of a deep machining damaged layer at a machined surface.

JP-A 2012-027976 (Patent Document 2) discloses a method in which in production of a glass substrate for a magnetic recording medium, the surface roughness of a cutting surface of a fixed abrasive grain tool is defined to suppress generation of a deep machining damaged layer at a machined surface.

Citation List

Patent Document 1: JP-A 2012-035330
Patent Document 2: JP-A 2012-027976

SUMMARY OF THE INVENTION

However, in the method described in Patent Document 1 or 2, a deep machining damaged layer exceptionally generated or a variation in the depth of the machining damaged layer, which depends on the dressing condition and life of grinding stone and a fixed abrasive grain tool, is not considered. Deep cracks or the like may remain even after the machining damaged layer removing step. Measurement of the depth of the machining damaged layer requires additional steps of precision cleaning, etching and the like, which may deteriorate productivity.

The present invention has been made in view of the above-described circumstances, and an object of the present invention is to provide a production method capable of reliably and efficiently removing a machining damaged layer, and producing a synthetic quartz glass substrate with good productivity.

The present inventor has conducted intensive studies, and resultantly found that by evaluating the depth of a machining damaged layer at a machined surface of a synthetic quartz glass substrate, and removing the machining damaged layer on the basis of the result of the evaluation, the machining damaged layer can be reliably and efficiently removed, and the productivity of the synthetic quartz glass substrate can be improved, leading to completion of the present invention.

Accordingly, the present invention provides the following method for producing a synthetic quartz glass substrate.

1. A method for producing a synthetic quartz glass substrate, including an evaluation step of evaluating a depth of a machining damaged layer at a machined surface of a synthetic quartz glass substrate, and a removal step of removing the machining damaged layer on the basis of a result of evaluation of the depth of the machining damaged layer.
2. The method for producing a synthetic quartz glass substrate according to 1, wherein in the evaluation step, whether the synthetic quartz glass substrate has predetermined values of an arithmetic average height (Sa), a skewness (Ssk) and a kurtosis (Sku) at the machined surface is evaluated, and depending on a result of the evaluation, the removal step is performed.

3. The method for producing a synthetic quartz glass substrate according to 2, wherein a synthetic quartz glass substrate satisfying the predetermined values is selected in the evaluation step, and the removal step is performed under a predetermined condition set in advance on the synthetic quartz glass substrate satisfying the predetermined values.

4. The method for producing a synthetic quartz glass substrate according to 2 or 3, wherein the predetermined values of the arithmetic average height (Sa), the skewness (Ssk) on an absolute value basis, and the kurtosis (Sku) are 2.0 $\mu$m or less, 0.8 or less and 5.0 or less, respectively.

5. The method for producing a synthetic quartz glass substrate according to 4, wherein the removal step in which a depth of removal is set to 30 $\mu$m is performed on the synthetic quartz glass substrate satisfying the predetermined values.

6. The method for producing a synthetic quartz glass substrate according to any one of 1 to 5, wherein the removal step includes mirror polishing or wet etching.

7. The method for producing a synthetic quartz glass substrate according to any one of 1 to 6, wherein the depth of the machining damaged layer is 30 $\mu$m or less.

ADVANTAGEOUS EFFECTS

According to the present invention, in production of a synthetic quartz glass substrate, the depth of a machining damaged layer at a machined surface is evaluated, and the machining damaged layer is removed on the basis of the evaluation, so that the machining damaged layer can be reliably and efficiently removed, and the productivity of the synthetic quartz glass substrate can be improved.

FURTHER EXPLANATIONS; OPTIONS AND PREFERENCES

The present invention is described in more detail below.

As described above, a method for producing a synthetic quartz glass substrate according to the present invention includes an evaluation step of evaluating the depth of a machining damaged layer at a machined surface of a synthetic quartz glass substrate, and a removal step of removing the machining damaged layer on the basis of the result of evaluation of the depth of the machining damaged layer.

In the present invention, the synthetic quartz glass substrate that undergoes the evaluation step and the removal step can be obtained by a conventional method. For example, a synthetic quartz glass ingot produced by reacting a silica raw material compound such as a silane compound or a siloxane compound with an oxyhydrogen flame is molded into a desired shape, subjected to annealing treatment, sliced to a desired thickness, and then wrapped, and if necessary, the outer periphery is polished to obtain a raw material substrate, which is roughly polished and precisely polished to produce the synthetic quartz glass substrate.

The shape of the synthetic quartz glass substrate may be any shape such as a quadrangular shape or a circular shape. There is no limitation on the shape and the size. For example, for a quadrangular glass substrate, a substrate having a size of 10 mm × 10 mm to 300 mm × 300 mm is preferably used. For a circular glass substrate, a substrate having a size of 10 to 300 mm in diameter is preferably used. The thickness of the synthetic quartz glass substrate is not limited, but is preferably 0.01 mm or more, particularly 0.05 mm or more, especially 0.1 mm or more, and preferably 300 mm or less, particularly 100 mm or less, especially 30 mm or less.

In the present invention, the depth of a machining damaged layer generated during cutting machining is evaluated and the layer is removed. As a substrate of interest, the above-described synthetic quartz glass substrate, on which cutting machining for imparting a shape suitable for a relevant use purpose is performed, can be applied.

Here, the amount of depth of the machining damaged layer at the machined surface is not limited, but is preferably 30 $\mu$m or less, and if the depth of the machining damaged layer is more than 30 $\mu$m, the amount of removal increases in the step of removing the machining damaged layer, which is disadvantageous in terms of productivity. When the depth of the machining damaged layer is 30 $\mu$m or less, the machining damaged layer can be removed in a unified manner under conditions that allow removal by at least 30 $\mu$m, it is not necessary to measure the depth of the machining damaged layer each time, and both quality and productivity can be secured.

Machining cutting of the synthetic quartz glass substrate can be performed using an apparatus such as a numerical control machine tool such as a machining center. Specifically, it is possible to perform the cutting machining using a grinding stone tool in which diamond abrasive grains, cubic boron nitride abrasive grains or the like are fixed by electrodeposition, metal bonding, or the like to a main shaft of a numerical control machine tool such as a machining center in which a desired shape is programmed. The grain size of the abrasive grains of the grinding stone tool is not limited, but is preferably #20 or more, particularly #100 or more, and preferably #5,000 or less, and particularly preferably #2,000 or less from the viewpoint of machining accuracy and productivity. The rotation speed of a main spindle of the grinding stone tool is not particularly limited, but is preferably 100 rpm or more, particularly preferably 1,000 rpm or more, and preferably 70,000 rpm or less, particularly preferably 60,000 rpm or less from the viewpoint of machining accuracy and productivity. Further, the cutting feed rate is not particularly limited, but is preferably 1 mm/min or more, particularly preferably 10 mm/min or more, and preferably 10,000 mm/min or less, particularly preferably 1,000 mm/min or less from the viewpoint of machining accuracy and productivity. For cooling, removal of cutting waste, and the like, cutting is preferably performed in the presence of a cutting liquid of, for example, emulsion type, water-soluble type or oily-type.

In the present invention, for example, before a synthetic quartz glass substrate having a machined surface prepared by the cutting machining undergoes the removal step of removing a machining damaged layer, the depth of the machining damaged layer at the machined surface of the synthetic quartz glass substrate is evaluated.

Examples of the method for evaluating the depth of the machining damaged layer at the machined surface of the synthetic quartz glass substrate in the present invention include a method in which the substrate is precisely cleaned to completely remove foreign matter such as cutting powder and cutting liquid, followed by measurement with a laser microscope or the like, and a method in which by etching with hydrofluoric acid or the like, the machining damaged layer is isotropically etched to increase the size of the opening to facilitate observation, followed by measurement with an optical microscope or a laser microscope.

Here, the evaluation step is only required to be capable of evaluating the depth of the machining damaged layer at the machined surface of the synthetic quartz glass substrate, and the specific method thereof is not limited, but it is preferable to evaluate whether synthetic quartz glass substrate has predetermined values of the arithmetic average height (Sa), the skewness (Ssk) and the kurtosis (Sku) at the machined surface.

The arithmetic average height (Sa), skewness (Ssk), and kurtosis (Sku) are values measured using a laser microscope, and are defined in ISO 25178-2. The laser microscope can be appropriately selected from heretofore known laser microscopes and used, and specific examples thereof include a shape analysis laser microscope: VK-X150 (controller)NK-X160 (measurer) manufactured by KEYENCE CORPORATION.

The arithmetic average height (Sa) is a parameter obtained by extending Ra of a contour curve (line roughness) parameter to three dimensions, represents an average of absolute values of differences in height between points with respect to a mean surface of the surface, and is calculated by the following expression (1).

$$S_a = \frac{1}{A} \iint_A |z(x,y)| dxdy$$

The skewness (Ssk) is a parameter representing the symmetry (deviation degree) of the height distribution in the surface roughness, and is calculated by the following expression (2). Here, Sq is a root-mean-square height, as well as a parameter corresponding to the standard deviation of the distance from the mean surface.

$$S_{sk} = \frac{1}{S_q^3} \left[ \frac{1}{A} \iint_A z^3 (x,y) dxdy \right]$$

The skewness (Ssk) represents the symmetry of concave portions and convex portions with respect to a reference height, and the number of pointed concave portions and the number of pointed convex portions become closer to each other as the value of skewness (Ssk) becomes closer to 0. The number of pointed convex portions with respect to the reference height becomes prominent when the value of skewness (Ssk) becomes larger than 0, and the number of pointed concave portions with respect to the reference height becomes prominent when the value of skewness (Ssk) becomes smaller than 0.

The kurtosis (Sku) is a parameter representing the sharpness of the height distribution in the surface roughness, and is calculated by the following expression (3). Here, Sq is a root-mean-square height, as well as a parameter corresponding to the standard deviation of the distance from the mean surface.

$$S_{ku} = \frac{1}{S_q^4} \left[ \frac{1}{A} \iint_A z^4 (x,y) dxdy \right]$$

The kurtosis (Sku) represents a state of the peak of the concave portion (or convex portion) with respect to the reference height. The number of steep pointed concave portions (or convex portions) with respect to the reference height significantly increases when the value of kurtosis (Sku) becomes larger than 3, and the number of steep pointed concave portions (or convex portions) significantly decreases when the value of kurtosis (Sku) becomes smaller than 3. A kurtosis (Sku) of 3 indicates that the distribution of peaks of the concave portions (or convex portions) (in particular, a relationship between the number of concave portions (or convex portions) and the height) is close to a normal distribution.

In the evaluation step of evaluating the depth of the machining damaged layer at the machined surface of the synthetic quartz glass substrate of the present invention, it is preferable to evaluate whether the synthetic quartz glass substrate has predetermined values of the arithmetic average height (Sa), the skewness (Ssk) and the kurtosis (Sku) at the machined surface, and it is preferable to perform the removal step depending on the result of the evaluation.

The predetermined value of the arithmetic average height (Sa) is preferably 2.0 $\mu$m or less, more preferably 1.8 $\mu$m or less. An arithmetic average height (Sa) of 2.0 $\mu$m or less indicates that the number of extreme concave portions (or convex portions) at the machined surface is relatively small.

The absolute value of the skewness (Ssk) is preferably 0.8 or less, more preferably 0.6 or less. A skewness (Ssk) of 0.8 or less on an absolute value basis indicates that the number of extreme concave portions (or convex portions) at the machined surface is relatively small.

Further, the kurtosis (Sku) is preferably 5.0 or less, more preferably 4.5 or less. A kurtosis (Sku) of 5.0 or less indicates that the irregular structure of the machined surface is an irregular surface which tends to have a relatively gentle inclination.

When the arithmetic average height (Sa), the skewness (Ssk), and the kurtosis (Sku) at the machined surface of the synthetic quartz glass substrate satisfy the predetermined values, it can be evaluated that a deep machining damaged layer is not exceptionally present at the machined surface, and the depth of the machining damaged layer is 30 $\mu$m or less. Therefore, when the predetermined values are satisfied, the machining damaged layer can be reliably removed by performing, as the removal step that is a next step, a removal step set on the assumption that the depth of removal is 30 $\mu$m. By determining whether the values of the arithmetic average height (Sa), the skewness (Ssk) and the kurtosis (Sku) satisfy predetermined values as described above, and the removal step is performed in a unified manner under conditions in advance on the basis of the result of the evaluation, the evaluation step and the removal step can be easily and efficiently performed without the need to carry out complicated evaluation operations and setting of conditions for the removal step each time.

In the present invention, the removal step of removing a machining damaged layer generated in the cutting machining step is performed on the basis of the result of evaluation in the evaluation step.

The removal step of removing a machining damaged layer at the machined surface preferably involves a method capable of performing machining (removing) at a constant rate, and is not limited, but preferably involves mirror polishing using a rotary polishing tool or a polishing pad, or wet etching using a glass etchant.

In the mirror polishing using the rotary polishing tool, for example, a polisher of the rotary polishing tool can be brought into contact with the machined surface at a constant pressure, and moved at a constant rate. By performing polishing under conditions of a constant pressure and a constant rate, the machined surface can be uniformly polished at a constant polishing rate. Specifically, the pressure at which the polisher of the rotary polishing tool contacts the surface is preferably 1 to 1,000,000 Pa, more preferably 1,000 to 100,000 Pa from the viewpoint of economic efficiency, ease of control, and the like. The rate is preferably 1 to 10,000 mm/min, more preferably 10 to 1,000 mm/min from the viewpoint of economic efficiency, ease of control, and the like. The amount of movement is appropriately set according to a shape and a size of the synthetic quartz glass substrate.

The rotary polishing tool for use in the mirror polishing is not limited as long as its polisher is a rotating body that can perform polishing, and examples thereof include a spindle having a tool chucking unit and a system in which a polishing tool is mounted on a leutor.

The type of material of the polishing tool is not limited as long as at least its polisher can remove a machining damaged layer, with examples thereof including GC grinding stone, WA grinding stone, diamond grinding stone, cerium grinding stone, a cerium pad, a rubber grindstone, a felt buff, and polyurethane.

The shape of the polisher of the polishing tool is not limited as long as it is a shape that allows a machining damaged layer to be removed, such as a circular or donut-shaped flat plate, a cylindrical shape, a bullet shape, a disk shape, or a barrel shape.

When the polisher of the rotary polishing tool is brought into contact with the machined surface to perform polishing, it is preferable to interpose a polishing abrasive grain slurry therebetween. Here, examples of the material of polishing abrasive grains include silica, ceria, alundum, white alundum (WA), emery, zirconia, SiC, diamond, titania, and Germania. The grain size of the abrasive grains is preferably 10 nm to 10 $\mu$m, and an aqueous slurry thereof can be preferably used.

As described above, the relative movement rate of the rotary polishing tool can be selected within a range of 1 to 10,000 mm/min, particularly 10 to 1,000 mm/min. The rotation speed of the rotary polishing tool is preferably 100 to 10,000 rpm, more preferably 1,000 to 8,000 rpm, still more preferably 2,000 to 7,000 rpm. If the rotation speed is low, it may take an excessively long time to remove a machining damaged layer because the machining rate decreases. If the rotation speed is high, it may be difficult to control the machining damaged layer removing step because the machining rate becomes high or the tool is heavily worn.

In the mirror polishing using a polishing pad, for example, polishing can be performed by, for example, contacting the rotary polishing pad with the synthetic quartz glass substrate at a constant pressure while moving one or both of the synthetic quartz glass substrate and the rotary polishing pad so as to relatively swing the synthetic quartz glass substrate and the rotary polishing pad. A rotary polishing pad impregnated with a polishing agent may be used, but it is preferable to perform machining with a polishing abrasive grain slurry interposed between the rotary polishing pad and the synthetic quartz glass substrate. The type of material of the polisher of the rotary polishing pad is not limited as long as it enables machining and removal of an object to be machined, with examples thereof including foamed polyurethane, cerium oxide-impregnated polyurethane, zirconium oxide-impregnated polyurethane, nonwoven fabric, suede, rubber, or wool felt.

When mirror polishing is performed in the presence of a polishing abrasive grain slurry, examples of the material of polishing abrasive grains include silica, ceria, alundum, white alundum (WA), FO abrasive grains, zirconia, SiC, diamond, titania, and Germania. The grain size of the abrasive grains is preferably 10 nm to 10 $\mu$m, and an aqueous slurry thereof can be preferably used. Examples of the method for pressing the rotary polishing pad at a constant pressure against a lateral surface of a substrate to be polished include methods using a pressurization mechanism such as a pneumatic piston or a load cell.

In the wet etching using a glass etchant, a method can be preferably utilized in which an aqueous solution containing hydrofluoric acid or a fluorine compound salt at a concentration of preferably 1 to 60 wt%, more preferably 20 to 50 wt% is used as the glass etchant, and the synthetic quartz glass substrate is immersed in the glass etchant. Examples of the fluorine compound salt include sodium fluoride and ammonium fluoride. It is also effective to add a surfactant, or the like to the glass etchant and application of a mixed aqueous solution of hydrofluoric acid and a fluorine compound salt for improvement of uniformity and stability of etching.

The treatment temperature and the treatment time in the wet etching vary depending on the concentration of the glass etchant, but normally, the treatment temperature is preferably 10 to 80°C, in particular, 20 to 40°C, and the treatment time is preferably 10 seconds to 10 hours, in particular, 30 seconds to 5 hours.

In the production method of the present invention, the removal step is performed on the basis of the result of evaluation in the evaluation step. In this case, whether the synthetic quartz glass substrate has predetermined values of, for example, the arithmetic average height (Sa), the skewness (Ssk) and the kurtosis (Sku) at the machined surface can be evaluated in the evaluation step, followed by setting of the depth of removal in the removal step depending on the result of the evaluation.

In this case, a synthetic quartz glass substrate in which the arithmetic average height (Sa), the skewness (Ssk) and the kurtosis (Sku) satisfy predetermined values can be selected in the evaluation step, with the removal step performed under predetermined conditions set in advance, on the synthetic quartz glass substrate satisfying the predetermined values. This enables the removal step to be continuously performed under constant conditions set in advance, so that the production efficiency can be significantly improved. For example, when the predetermined values of the arithmetic average height (Sa), the skewness (Ssk) and the kurtosis (Sku) are set, respectively, to 2.0 $\mu$m or less (Sa), 0.8 or less (Ssk) on an absolute value basis and 5.0 or less (Sku) as described above, it can be evaluated that the depth of the machining damaged layer is 30 $\mu$m or less. Therefore, by performing the removal step on the synthetic quartz glass substrate under constant conditions set so that the depth of removal is 30 $\mu$m, the machining damaged layer can be reliably and efficiently removed without the necessity of complicated operations such that the depth of the machining damaged layer is measured by complicated operations, and the depth of removal is set for each synthetic quartz glass substrate, so that productivity can be effectively improved. More preferably, the predetermined values of Sa, Ssk and Sku in the evaluation step here are, respectively, 1.8 $\mu$m or less, 0.6 or less on an absolute value basis and 4.5 or less as described above. This enables the machining damaged layer to be more reliably removed, so that machining reliability can be further enhanced.

For example, a synthetic quartz glass substrate that has not satisfied the set predetermined values in the evaluation step may be subjected to the removal step under conditions intended for a larger depth of removal, or may be even excluded from objects to be subjected to the removal step.

When by the method for producing a synthetic quartz glass substrate according to the present invention, holes, slits, grooves, level differences and the like, which depend on an intended product such as a semiconductor substrate, an optical member, microfluidics or a microlens array, are formed on a synthetic quartz glass substrate by cutting machining, and a machining damaged layer at a machined surface is evaluated, for example, the machining damaged layer generated by the machining cutting can be removed simply by setting a removal time based on the assumption that the depth of the machining damaged layer is equivalent to 30 $\mu$m, so that productivity can be improved.

EXAMPLE

Examples and Comparative Examples are given below to more concretely illustrate the present invention, although the present invention is not limited by these Examples.

[Example 1]

A sliced synthetic quartz glass raw material was lapped in a double-side lapping machine engaging in a sun-and-planet motion, then roughly polished with a hard urethane polishing cloth and a cerium oxide-based polishing agent in a double-side polishing machine engaging in a sun-and-planet motion, and then precisely polished with a suede-based polishing cloth and a colloidal silica-based polishing agent in a double-side polishing machine engaging in a sun-and-planet motion, thereby preparing a synthetic quartz glass substrate 152 mm square in outside dimension and 6.35 mm in thickness.

Next, a blind hole 50 mm in diameter and 2.5 mm in depth was formed in the synthetic quartz glass substrate by performing cutting machining with a machining center. The cutting machining was helical machining under the following machining conditions using a water-soluble cutting liquid.

<Machining conditions>

| | |
|---|---|
| Cutting machining tool: | Metal bond mounted wheels (manufactured by TOKYO DIAMOND TOOL MFG CO., LTD.) |
| Abrasive grain size: | #120 |
| Spindle rotation speed: | 10,000 rpm |
| Cutting feed rate: | 600 mm/min |
| Helical lead: | 0.050 mm |

The arithmetic average height (Sa), the skewness (Ssk) and the kurtosis (Sku) of the machined surface of the synthetic quartz glass substrate having a blind hole formed by cutting machining were measured with a shape analysis laser microscope under the following conditions according to ISO25178-2. The results showed that Sa was 1.79 $\mu$m, Ssk was -0.26, and Sku was 4.56.

<Measurement conditions>

| | |
|---|---|
| Shape analysis laser microscope: | VK-X150 (controller)/VK-X160 (measurer) (manufactured by KEYENCE CORPORATION) |
| Objective lens magnification: | 10 |
| Laser wavelength: | 658 nm |
| Measurement mode: | Surface shape mode |
| Measurement pitch: | 0.20 $\mu$m |
| Measurement range: | rectangular (1056 $\mu$m $\times$ 1408 $\mu$m) |
| Measurement quality: | high accuracy |

For the synthetic quartz glass substrate, the depth of the machining damaged layer at the machined surface was examined by the following measurement method. The result showed that the depth of the machining damaged layer was 30 $\mu$m or less (28.03 $\mu$m), and it was possible to completely remove the machining damaged layer when the machining time was set for removal by 30 $\mu$m as calculated from the machining rate in mirror polishing or wet etching.

Measurement method

The synthetic quartz glass substrate was precisely cleaned with hot concentrated sulfuric acid, a weak alkaline surfactant and pure water, and then dried with IPA. Thereafter, the maximum height (Sz) of the machined surface of the synthetic quartz glass substrate was measured with a shape analysis laser microscope under the following conditions according to ISO 25178-2.

<Measurement conditions>

| Shape analysis laser microscope: | VK-X150 (controller)/VK-X160 (measurer) (manufactured by KEYENCE CORPORATION) |
|---|---|
| Objective lens magnification: | 10 |
| Laser wavelength: | 658 nm |
| Measurement mode: | Surface shape mode |
| Measurement pitch: | 0.20 $\mu$m |
| Measurement range: | rectangular (1056 $\mu$m $\times$ 1408 $\mu$m) |
| Measurement quality: | high accuracy |

[Reference Example]

A synthetic quartz glass substrate was prepared in the same procedure as in Example 1, and subjected to cutting machining under the same processing conditions as in Example 1 with the same machining center as in Example 1 to form a blind hole 50 mm in diameter and 2.5 mm in depth.

The machined surface of the synthetic quartz glass substrate was measured in the same procedure as in Example 1, and the results showed that Sa was 1.79 $\mu$m, Ssk was -1.18, and Sku was 8.27.

For the synthetic quartz glass substrate, the depth of the machining damaged layer at the machined surface was examined by the same measurement method as in the Example. The result showed that the value of the depth of the machining damaged layer was more than 30 $\mu$m (36.74 $\mu$m), and it was not possible to completely remove the machining damaged layer when the machining time was set for removal by 30 $\mu$m as calculated from the machining rate in mirror polishing or wet etching, and quality abnormality or necessity of additional processing occurred. Therefore, the synthetic quartz glass substrate is excluded from objects to be subjected to the removal step that is a next step, or another machining time or the like is set, and the removal step is performed.

**Claims**

1. A method for producing a synthetic quartz glass substrate, comprising an evaluation step of evaluating a depth of a machining damaged layer at a machined surface of a synthetic quartz glass substrate, and a removal step of removing the machining damaged layer on the basis of a result of evaluation of the depth of the machining damaged layer.

2. The method for producing a synthetic quartz glass substrate according to claim 1, wherein in the evaluation step, whether the synthetic quartz glass substrate has predetermined values of an arithmetic average height (Sa), a skewness (Ssk) and a kurtosis (Sku) at the machined surface is evaluated, and depending on a result of the evaluation, the removal step is performed.

3. The method for producing a synthetic quartz glass substrate according to claim 2, wherein a synthetic quartz glass substrate satisfying the predetermined values is selected in the evaluation step, and the removal step is performed under a predetermined condition set in advance on the synthetic quartz glass substrate satisfying the predetermined values.

4. The method for producing a synthetic quartz glass substrate according to claim 2 or 3, wherein the predetermined values of the arithmetic average height (Sa), the skewness (Ssk) on an absolute value basis, and the kurtosis (Sku) are 2.0 $\mu$m or less, 0.8 or less and 5.0 or less, respectively.

5. The method for producing a synthetic quartz glass substrate according to claim 4, wherein the removal step in which a depth of removal is set to 30 $\mu$m is performed on the synthetic quartz glass substrate satisfying the predetermined values.

6. The method for producing a synthetic quartz glass substrate according to any one of claims 1 to 5, wherein the removal step comprises mirror polishing or wet etching.

7. The method for producing a synthetic quartz glass substrate according to any one of claims 1 to 6, wherein the depth of the machining damaged layer is 30 $\mu$m or less.

# EUROPEAN SEARCH REPORT

Europäisches
Patentamt
European
Patent Office
Office européen
des brevets

**Application Number**

EP 25 20 9825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/185619 A1 (NIPPON ELECTRIC GLASS CO [JP]) 12 September 2024 (2024-09-12) * paragraph [0030]; claims; figures; examples; tables * ----- | 1-7 | INV. C03C15/02 B24B1/00 B24B7/00 |
| X | EP 2 399 707 A2 (SHINETSU CHEMICAL CO [JP]) 28 December 2011 (2011-12-28) * paragraphs [0007] - [0068]; claims; examples * ----- | 1-7 | |
| X | US 2004/192063 A1 (KOIKE KESAHIRO [JP]) 30 September 2004 (2004-09-30) * paragraphs [0012] - [0115]; claims; figures; examples * ----- | 1-7 | |
| X | US 2015/260877 A1 (UEDA SHUHEI [JP] ET AL) 17 September 2015 (2015-09-17) * paragraphs [0009] - [0028]; claims; examples; tables * ----- | 1-7 | |
| | | | **TECHNICAL FIELDS SEARCHED (IPC)** C03C B24B |

The present search report has been drawn up for all claims

| Place of search | Date of completion of the search | Examiner |
|---|---|---|
| Munich | 4 March 2026 | Wrba, Jürgen |

EPO FORM 1503 03.82 (P04C01)

## ANNEX TO THE EUROPEAN SEARCH REPORT
## ON EUROPEAN PATENT APPLICATION NO.

EP 25 20 9825

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2026

| Patent document cited in search report | Publication date | Patent family member(s) | Publication date |
|---|---|---|---|
| WO 2024185619 A1 | 12-09-2024 | CN 120569355 A | 29-08-2025 |
| | | JP WO2024185619 A1 | 12-09-2024 |
| | | WO 2024185619 A1 | 12-09-2024 |
| EP 2399707 A2 | 28-12-2011 | CN 102314082 A | 11-01-2012 |
| | | CN 102328265 A | 25-01-2012 |
| | | EP 2399707 A2 | 28-12-2011 |
| | | EP 2399708 A2 | 28-12-2011 |
| | | JP 5664470 B2 | 04-02-2015 |
| | | JP 5664471 B2 | 04-02-2015 |
| | | JP 2012032785 A | 16-02-2012 |
| | | JP 2012032786 A | 16-02-2012 |
| | | KR 20120005947 A | 17-01-2012 |
| | | KR 20120005948 A | 17-01-2012 |
| | | KR 20180027482 A | 14-03-2018 |
| | | MY 158752 A | 15-11-2016 |
| | | MY 159084 A | 15-12-2016 |
| | | TW 201218263 A | 01-05-2012 |
| | | TW 201220375 A | 16-05-2012 |
| | | US 2011318995 A1 | 29-12-2011 |
| | | US 2011318996 A1 | 29-12-2011 |
| US 2004192063 A1 | 30-09-2004 | DE 102004014954 A1 | 10-03-2005 |
| | | KR 20040084999 A | 07-10-2004 |
| | | US 2004192063 A1 | 30-09-2004 |
| US 2015260877 A1 | 17-09-2015 | CN 104934499 A | 23-09-2015 |
| | | EP 2942332 A1 | 11-11-2015 |
| | | JP 6323364 B2 | 16-05-2018 |
| | | JP 2015193527 A | 05-11-2015 |
| | | KR 20150108318 A | 25-09-2015 |
| | | MY 180533 A | 01-12-2020 |
| | | NO 2942332 T3 | 27-01-2018 |
| | | TW 201540683 A | 01-11-2015 |
| | | US 2015260877 A1 | 17-09-2015 |
| | | US 2017123102 A1 | 04-05-2017 |

EPO FORM P0459

For more details about this annex : see Official Journal of the European Patent Office, No. 12/82

**EP 4 737 416 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012035330 A

- JP 2012027976 A